# EUROPEAN PATENT APPLICATION

(11) **EP 3 264 395 A1**
(43) Date of publication of application: **03.01.2018**
(21) Application number: 16191848.7
(22) Date of filing: 30.09.2016
(51) Int. Cl.: G09B 19/00

(54) **SYSTEM AND METHOD FOR DYNAMICALLY TRAINING BOTS IN RESPONSE TO CHANGE IN PROCESS ENVIRONMENT**

(30) Priority: 27.06.2016 IN 201641021969
(71) Applicant: Wipro Limited, 560 035 Karnataka (IN)
(72) Inventor: HOSBETTU, Raghavendra, 560085 Bangalore (IN); RAMANNA, Ramprasad Kanakatte, 560103 Bangalore (IN); MANNOPANTAR, Raghottam, 560076 Bangalore (IN)
(74) Representative: Finnegan Europe LLP

(57) **Abstract**

This disclosure relates to system and method for dynamically training bots in response to change in process environment. In one embodiment, the method comprises detecting the one or more changes in the process environment, and determining a need for training the one or more BOTs based on the one or more changes in the process environment. In response to the need, the method further comprises recording the one or more changes in the process environment until a conformation of the process environment to a pre-existing process environment with respect to the one or more BOTs, and dynamically training the one or more BOTs based on the recording of the one or more changes.

## Description

### Technical Field

This disclosure relates generally to artificial intelligence, and more, particularly to a system and method for dynamically training BOTs in response to a change in a process environment.

### Background

Nowadays various applications have user interfaces designed to use specific functions and accomplish certain goals through a sequence of operations. Some of these processes/activities are repetitive in nature. Most of these processes/activities have associated rules and specific sequence of actions to be followed to complete the task, for example, use of a web application to book a travel ticket, use of a SAP application to allocate resources, use of a web application to approve leave, etc. Various cognitive solutions may be designed to automate such processes/activities. Such solutions involve creating one or more BOTs and assigning specific tasks to them. Once the BOT is created for a particular task, the BOT can perform the task whenever an instruction is received to perform the task.

These cognitive solutions learn and adapt on their own continuously. For example, the solution may follow the user action, system behavior, system response, error conditions, key board shortcuts, and may extract of a goal of the task therefrom. These solutions may also discover the sequence of steps to the goal by following the various paths and the learnt path to the goal for the user. However, there are certain limitations with these solutions. For example, in many usage scenarios, the conditions or environment in which the cognitive solution has been trained and is operating may change. In such scenarios, the BOTs are incapable of continuously learning and dynamically adapting on its own in response to change in process environment.

### SUMMARY

In one embodiment, a method for dynamically training one or more BOTs in response to one or more changes in a process environment is disclosed. In one example, the method comprises detecting the one or more changes in the process environment. The method further comprises determining a need for training the one or more BOTs based on the one or more changes in the process environment. In response to the need, the method further comprises recording the one or more changes in the process environment until a conformation of the process environment to a pre-existing process environment with respect to the one or more BOTs, and dynamically training the one or more BOTs based on the recording of the one or more changes.

In one embodiment, a system for dynamically training one or more BOTs in response to one or more changes in a process environment is disclosed. In one example, the system comprises at least one processor and a memory communicatively coupled to the at least one processor. The memory stores processor-executable instructions, which, on execution, cause the processor to detect the one or more changes in the process environment. The processor-executable instructions, on execution, further cause the processor to determine a need for training the one or more BOTs based on the one or more changes in the process environment. In response to the need, the processor-executable instructions, on execution, further cause the processor to record the one or more changes in the process environment until a conformation of the process environment to a pre-existing process environment with respect to the one or more BOTs, and to dynamically train the one or more BOTs based on the recording of the one or more changes.

In one embodiment, a non-transitory computer-readable medium storing computer-executable instructions for dynamically training one or more BOTs in response to one or more changes in a process environment is disclosed. In one example, the stored instructions, when executed by a processor, cause the processor to perform operations comprising detecting the one or more changes in the process environment. The operations further comprise determining a need for training the one or more BOTs based on the one or more changes in the process environment. In response to the need, the operations further comprise recording the one or more changes in the process environment until a conformation of the process environment to a pre-existing process environment with respect to the one or more BOTs, and dynamically training the one or more BOTs based on the recording of the one or more changes.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram of an exemplary system for dynamically training BOTs in response to change in process environment and in accordance with some embodiments of the present disclosure.
**FIG. 2** is a functional block diagram of dynamic training engine in accordance with some embodiments of the present disclosure.
**FIG. 3** is a functional block diagram of state monitoring sub-module in accordance with some embodiments of the present disclosure.
**FIG. 4** is a functional block diagram of anticipator sub-module in accordance with some embodiments of the present disclosure.
**FIG. 5** is a flow diagram of an exemplary process for dynamically training BOTs in response to change in process environment and in accordance with some embodiments of the present disclosure.
**FIG. 6** is a flow diagram of a detailed exemplary process for dynamically training BOTs in response to change in process environment and in accordance with some embodiments of the present disclosure.
**FIG. 7** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

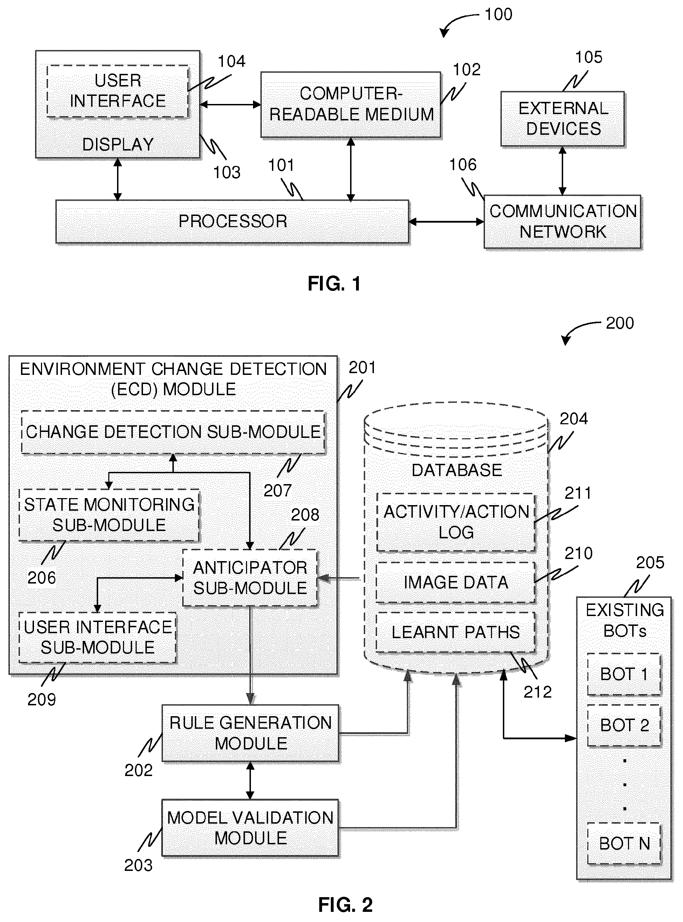

Referring now to FIG. 1, an exemplary system 100 for operationalizing a process environment (e.g., booking tickets via a web application, applying or approving leave via an Oracle application, allocating resources via a SAP application, etc.) is illustrated. As will be appreciated, the system may enable one or more users to maneuver through the process environment and accomplish various tasks. Additionally, the system may enable various BOTs to assist the one or more users by automating the maneuvering and accomplishment of various tasks. As used herein, the term "BOT" preferably refers to a computer program that is configured to perform a task, and more preferably refers to a computer program that is configured to automate a computing task that would otherwise be performed by a user. The BOT may comprise a machine learning algorithm, such that the BOT can be trained to perform the task. The term "process environment" preferably refers to a computing environment, or a part of a computing environment, in which the BOT is configured to perform a task. In accordance with some embodiments of the present disclosure, the exemplary system 100 also enables detection of change in process environment and dynamic training of BOTs in response to the change in process environment. In particular, the system 100 includes a training device (e.g., a computing device) that implements a dynamic training engine for detecting change in process environment and for performing dynamic training of BOTs in response to the change in process environment. It should be noted that the process environment may comprise a system environment, a software environment, a user interface, a user action on a user interface, a user navigation within the user interface, and so forth. The change in process environment therefore may include, but are not limited to, change in display device or its settings, change in operating system or its version, change in business or configuration rules, change in user interface (e.g., change in layout, design, icon, input type, etc.), change in user navigation, or any other confirmatory predictors. It should be noted that, in some embodiments, the confirmatory predictors may be a unique combination of one or more attributes of the process environment. For example, confirmatory predictors may be a combination of objects, events, positions, or combinations of specific states (or screens). Confirmatory predictors may be determined dynamically for each screen in each training set.

As will be described in greater detail in conjunction with FIGS. 2-4, the dynamic training engine comprises environment change detection (ECD) module, rule generation module, model validation module, database, and so forth. The dynamic training engine detects a change in the process environment via the ECD module, and determines a need for training existing BOTs or creating and training new BOTs based on the change in the process environment. In response to the need, the dynamic training engine records various changes in the process environment until a conformation of the process environment to a pre-existing process environment with respect to the BOTs, and dynamically trains the BOTs based on the recording of the various changes.

The system 100 comprises one or more processors 101, a computer-readable medium (e.g., a memory) 102, and a display 103. The computer-readable storage medium 102 stores instructions that, when executed by the one or more processors 101, cause the one or more processors 101 to perform dynamic training of BOTs in response to change in process environment and in accordance with aspects of the present disclosure. The computer-readable storage medium 102 may also store various data (e.g., image data, activity or action logs, BOTs, learnt paths, etc.) that may be captured, processed, and/or required by the system 100. The system 100 interacts with the one or more users via a user interface 104 accessible via the display 103. The system 100 may also interact with one or more external devices 105 over a communication network 106 for sending or receiving various data. The external devices 105 may include, but are not limited to, a remote server (e.g., web server, application server, etc.), a digital device, or another computing system (e.g., other similar system).

Referring now to FIG. 2, a functional block diagram of the dynamic training engine 200 implemented by the system 100 of FIG. 1 is illustrated in accordance with some embodiments of the present disclosure. The dynamic training engine 200 may detect any change in the process environment, rules, etc. and anticipate the need for re-training the existing BOTs. The dynamic training engine 200 may include various modules that perform various functions so as to dynamically train BOTs in response to change in process environment. In some embodiments, the dynamic training engine 200 comprises the environment change detection (ECD) module 201, a rule generation module 202, a model validation module 203, and a database 204. As will be appreciated by those skilled in the art, the dynamic training engine 200 is also in communication with the existing BOTs 205 (e.g., BOT 1, BOT 2, BOT 3 ... BOT N) that have been trained to perform various tasks. It should be noted that each BOT is trained to perform a task which is called as the goal of that BOT. When the BOT trainings are completed, the learnt path for each goal is stored in learnt paths database within the database 204. The learnt paths database comprises the details of various BOTs which are trained in the given system.

The ECD module 201 detects change in the process environment and provides the recorded change (if any) to the rule generation module 202. In some embodiments, the ECD module 201 comprises state monitoring sub-module 206, change detection sub-module 207, anticipator sub-module 208, and user interface sub-module 209. It should be noted that these sub-modules 206 - 209 may work as independent services, and the services may operationalize as soon as the process environment is invoked within the system 100 to keep observing BOT environment for further processing. Further, it should be noted that the sub-modules 206 - 209 may be running even when there are no active BOTs. In other words, the sub-modules 206 - 209 may operationalize as soon as the system 100 starts.

The state monitoring sub-module 206 captures various screens or states (i.e., images of various instances of the user interface) that the user or the BOTs navigates through. Additionally, the state monitoring sub-module 206 captures the actions or activities performed by the user or the BOTs, and an order of such actions or activities. In some embodiments, the sub-module 206 may employ image processing techniques (e.g. image filtering, edge detection, optical character recognition (OCR), etc.) to determine contours and edges and to deduce various information from screen. The sub-module 206 then labels the information so determined or deduced. In some embodiments, the sub-module 206 creates database tables to store screen elements, user activities or actions, and order of such activities or actions in the database 204. Further, the sub-module 206 pass the acquired or processed information related to the screen to the change detection sub-module 207.

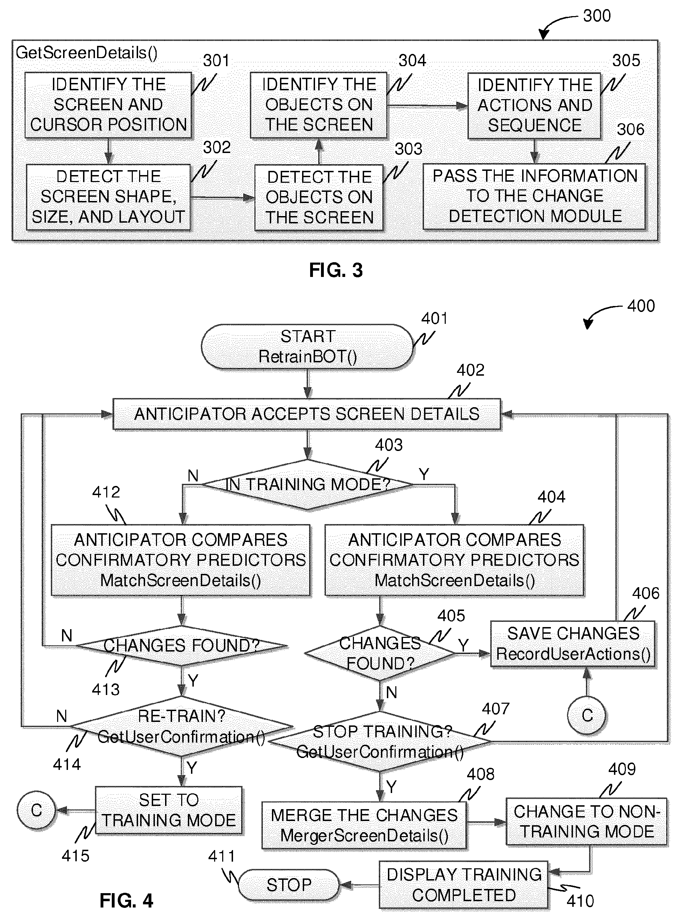

Referring now to FIG. 3, an exemplary functional block diagram 300 of the state monitoring sub-module 206 is illustrated in accordance with some embodiments of the present disclosure. In some embodiments, the sub-module 206 may call GetScreenDetails() routine or function to capture the screen details using the screen title and the mouse pointer position on the screen. The screen details may include the objects on the screen information, actions performed by the user on the screen, and action order on the screen. For example, the screen information may include, but are not limited to, objects on the screen such as images, buttons, icons, shortcut keys, controls such as textboxes, labels, dropdowns, hyperlinks, and so forth. The screen details may be stored in the screen state table in the database 204 and may be accessed by the change detection sub-module 207 as and when required.

In some embodiments, the GetScreenDetails() routine may identify the user interface screen and cursor position at step 301 and then detect the screen shape, size, and layout at step 302. The GetScreenDetails() routine may further detect the objects on the screen at step 303, and identify the detected objects at step 304 (e.g., by determining the function(s) associated with the objects). Moreover, the GetScreenDetails() routine may identify the actions performed and sequence of the performed actions at step 305. Further, the GetScreenDetails() routine may pass the information gathered to change detection sub-module 207 at step 306 upon request by the change detection sub-module 207.

Referring back to FIG. 2, the change detection sub-module 207 requests the state monitoring sub-module 206 to capture the screen details, receives the screen details from the state monitoring sub-module 206, and then passes the received details to the anticipator sub-module 208. Thus, the change detection sub-module 207 continuously observes BOTs' actions and passes the observations to the anticipator sub-module 208 to detect the changes and to check if the re-training is required. In some embodiments, the sub-module 207 may call SendScreenDetails() routine or function to get the screen details from the GetScreenDetails() routine or function of the state monitoring sub-module 206, and then sends the screen details to anticipator sub-module 208.

The anticipator sub-module 208 determines if there are any changes in the process environment including rule changes, user actions and sequence, or devices. For example, the sub-module 208 may identify any change in the user actions and sequence for a given screen compared to previous monitoring trials where the user utilized the same screen. Thus, the sub-module 208 receives the screen/state details from the change detection sub-module 207, and compares the same with the existing details for achieving the goal for a particular BOT. If there is a change (i.e., any difference in the confirmatory predictors), the anticipator sub-module 208 notifies the user through the user interface sub-module 209 and prompts for confirmation from the user for re-training. Upon user confirmation to retrain, the anticipator sub-module 208 starts recording the user actions and other details. Further, while training is going on, the anticipator sub-module 208 keeps comparing the screen/state details with existing details till confirmatory predictors are observed again. Once the confirmatory predictors are found, the anticipator sub-module 208 notifies the user about known path and asks if user wants to stop training through the user interface sub-module 209. Further, the anticipator sub-module 208 merges the modifications, inserts the changes, and removes the unwanted or outdated data with respect to the changes trained by user. At the end of the re-training, the anticipator sub-module 208 notifies the user about completion of the training through the user interface sub-module 209.

Referring now to FIG. 4, an exemplary functional block diagram 400 of the anticipator sub-module 208 is illustrated in accordance with some embodiments of the present disclosure. In some embodiments, the sub-module 208 may call the RetrainBOT() routine to dynamically re-train a BOT in response to change in the process environment. It should be noted that the RetrainBOT() is the main routine of the anticipator sub-module 208 and is invoked as soon as the anticipator sub-module 208 starts at step 401. In some embodiments, the RetrainBOT() routine accepts the screen details at step 402. If the BOT is in 'TRAINING' state at step 403, then the RetrainBOT() routine compares the screen details captured with screen details existing in the activity/action log and image data tables from the database 204 by calling MatchScreenDetails() sub-routine at step 404. If there are changes or if matching confirmatory predictors are less than minimum confirmatory predictors threshold at step 405, then the RetrainBOT() routine records the changes by calling RecordUserActions() sub-routine in a NewTrainingData table at step 406 and returns to step 402 to accept further screen details. However, if there are no changes or if matching confirmatory predictors are more than minimum confirmatory predictors threshold, then the RetrainBOT() routine receives user confirmation to stop training by calling GetUserConfirmation() sub-routine at step 407. If the user confirmation is positive, then the RetrainBOT() routine merges the data from the NewTrainingData table with the existing training data by calling MergeScreenDetails() sub-routine at step 408. As noted above, the merging of data may result in addition of new data, modification of existing data, or deletion of the outdated data. Further, the RetrainBOT() routine changes the BOT to 'NON-TRAINING' state at step 409, notifies the user about completion of training at step 410, and stops at step 411. However, if the user confirmation at step 407 is negative, the RetrainBOT() routine returns to step 402 to accept further screen details.

Further, if the BOT is in 'NON-TRAINING' state at step 403, then the RetrainBOT() routine compares the screen details captured with screen details existing in the activity/action log and image data tables from the database 204 using MatchScreenDetails()sub-routine at step 412. If details match i.e. if there are no changes at step 413, the RetrainBOT() routine returns to step 402 to accept further screen details. However, if details do not match i.e. if there are changes, the RetrainBOT() routine notifies the user about the changes and receives user confirmation to initiate re-training of BOT by calling GetUserConfirmation() sub-routine at step 414. If the user confirmation at step 414 is positive, then the RetrainBOT() routine changes the BOT to 'TRAINING' state at step 415 and initiates re-training. The RetrainBOT() routine first records the changes by calling the RecordUserActions() sub-routine in the NewTrainingData table at step 406, and then returns to step 402 to accept further screen details. However, if the user confirmation at step 414 is negative, then the RetrainBOT() routine returns to step 402 to keep accepting screen details.

In some embodiments, the MatchScreenDetails() sub-routine accepts the screen details and compares the screen details with existing screen details for a particular BOT process. If a match is found, the MatchScreenDetails() sub-routine returns TRUE else returns FALSE. Additionally, in some embodiments, the RecordUserActions() sub-routine accepts the screen details, saves the screen details into NewTrainingData table, and returns TRUE. In some embodiments, the GetUserConfirmation() sub-routine passes the notifications or messages to the user via the user interface sub-module 209 and waits for user confirmation. The GetUserConfirmation() sub-routine then returns the user response (i.e., YES or NO). Further, in some embodiments, the MergeScreenDetails() sub-routine compares the screen details in NewTrainingData table with existing screen details for a particular BOT. The MergeScreenDetails() sub-routine then modifies the existing data based on the sequence of the actions and confirmatory predictors. For example, the MergeScreenDetails() sub-routine adds the data if the details are new, modifies the data if the details have changed from the existing details, or deletes the data if the existing changes are no longer required.

Referring back to FIG. 2, the user interface sub-module 209 enables the system 100 in general and dynamic training engine 200 in particular to communicate with the user. The sub-module 209 communicates to the user about the various states of the BOT and accepts the command from the user for further processing. For example, the sub-module 209 provides various notifications to the user such as 'BOT is unable to proceed based on its existing learning as there are changes and hence requires re-training', 'Does the user wish to re-train so that BOT can learn?', 'BOT understands the Path for goal now and training may be stopped', 'Does the user want to stop training?' 'Training completed', and so forth. Further, the sub-module 209 receives various inputs from the user such as the confirmation on re-training, stopping the re-training, and so forth.

The rule generation module 202 may automatically generate rules governing process automation. Additionally, the rule generation module 202 may update the rules as per the changes recoded by the anticipator sub-module 208. For example, in some embodiments, the rule generation module 202 may build a decision tree (rules) with valid values and extremas (e.g., maximums and minimums), optimizes the use of confirmatory predictors, and so forth. In some embodiments, rule and log information can be associated with a set of actions whose variables and their associated values define rules. Rules may be derived from success and failure logs. A wide range of factors may contribute in defining this relationship: the action recently occurred, the values of variables associated with the actions, and the specific order of actions. Each action and its value may define the number, order, names, and types of the variables that build the rule. Each value of an action may include a timestamp, which represents the time of occurrence.

The model validation module 203 validates the newly trained learned model (e.g., learnt paths) for the BOT. For example, the model validation module 203 may analyze the goal achieved using confusion vector with adaptive thresh-holding thereby continuously updating model for optimized results. In some embodiments, an automated model validation procedure may be trained multiple times for end-to-end process. In each process, multiple screens may be involved, and each screen's details may be captured in training logs 810. The model validator 830 may validate the models built based on these training logs.

The database 204 comprises an image database 210, an activity or action log database 211, and learnt paths database 212. The image database 210 stores the images of all screens, screen components, popup screens, information messages, error messages, and so forth. The activity or action log database 211 stores the parameters, actions, activities, flow order associated with each image of the user interface on which a user is performing some operations, and so forth. The learnt paths database 212 stores the learnt paths to perform various tasks or to achieve various goals (one goal for one BOT) from the various positions based on the training data. In an example, the learnt paths database 212 may comprise screen details and confirmatory predictors for trained BOTs. It should be noted that the learnt paths may be built by the optimal path builder method, which is built in for each BOT, when BOT training is completed. The learnt paths may have all screen details and confirmatory predictors for trained BOTs.

As will be appreciated by those skilled in the art, all such aforementioned modules and sub-modules may be represented as a single module or a combination of different modules. Further, as will be appreciated by those skilled in the art, each of the modules or sub-modules may reside, in whole or in parts, on one device or multiple devices in communication with each other.

By way of an example, the dynamic training engine 200 detects the change in the process environment. The engine 200 may then notify the user that the BOT cannot proceed based on its existing learning as there are changes in the process environment, and the BOT therefore needs retraining with respect to the specific changes it has detected. The dynamic training engine 200 may also prompt the user to confirm re-training. Upon confirmation, the dynamic training engine 200 starts recording the changes until it again observes a known pattern conforming to its existing learning in the process environment. The engine 200 may then notify the user that the BOT understands the Path for goal now and that the training may be terminated. The dynamic training engine 200 may also prompt the user to confirm stopping of re-training. Upon confirmation, the dynamic training engine 200 updates the database with new states and confirmatory predictors so recorded. The engine 200 may also configure, modify, or otherwise delete rules based on the new states and confirmatory predictors. Finally, the engine 200 may validate the new model to complete the training. Upon completion, the engine may also notify the user about the completion of training. It should be noted that once the BOT retraining need is detected and communicated there may be multiple possibilities. For example, upon user confirmation the BOT may be retrained with respect to the process environment changes that are different from the regular trainings. The training may be full or partial. The changes may be at the beginning only, or at the end only, or in the one of the middle states, or in many middle states.

As will be appreciated by one skilled in the art, a variety of processes may be employed for dynamically training existing BOTs in response to change in the process environment. For example, the exemplary system 100 may perform dynamic training of the BOTs by the processes discussed herein. In particular, as will be appreciated by those of ordinary skill in the art, control logic and/or automated routines for performing the techniques and steps described herein may be implemented by the system 100, either by hardware, software, or combinations of hardware and software. For example, suitable code may be accessed and executed by the one or more processors on the system 100 to perform some or all of the techniques described herein. Similarly application specific integrated circuits (ASICs) configured to perform some or all of the processes described herein may be included in the one or more processors on the system 100.

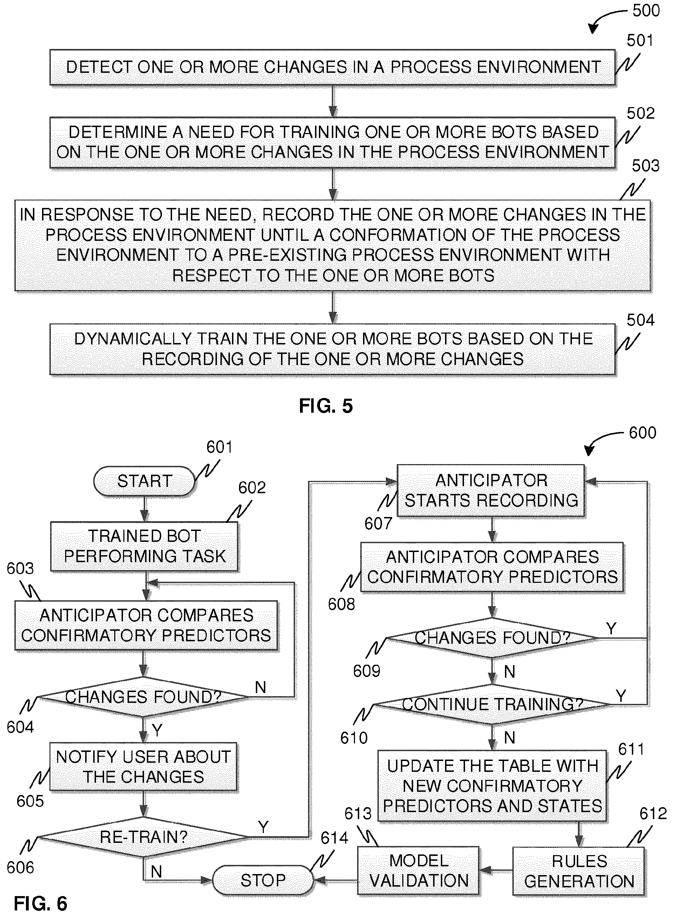

For example, referring now to FIG. 5, exemplary control logic 500 for dynamically training one or more BOTs in response to one or more changes in a process environment via a system, such as system 100, is depicted via a flowchart in accordance with some embodiments of the present disclosure. As illustrated in the flowchart, the control logic 500 includes the steps of detecting the one or more changes in the process environment at step 501, and determining a need for training the one or more BOTs based on the one or more changes in the process environment at step 502. In response to the need, the control logic 500 includes the steps of recording the one or more changes in the process environment until a conformation of the process environment to a pre-existing process environment with respect to the one or more BOTs at step 503, and dynamically training the one or more BOTs based on the recording of the one or more changes at step 504. The control logic may detect a conformation of the process environment to a pre-existing process environment when it observes that the process environment (or one or more attributes of the process environment) matches a process environment for which one or more BOTs have already been trained. The changes that were recorded may be used as an input to a machine learning process, so as to train the bot to perform a computing task in the changed process environment.

In some embodiments, the process environment comprises a system environment, a software environment, a user interface, a user action on a user interface, a user navigation within the user interface, and so forth. In some embodiments, detecting at step 501 further comprises monitoring one or more attributes of the process environment, and comparing the one or more attributes of the process environment with one or more pre-existing attributes of the pre-existing process environment with respect to the one or more BOTs. In some embodiments, determining the need for training at step 502 comprises determining a difference in one or more confirmatory predictors between the process environment and the pre-existing process environment with respect to the one or more BOTs. It should be noted that each of the one or more confirmatory predictors comprise a unique combination of one or more attributes of the process environment.

In some embodiments, the control logic 500 further includes the steps of notifying a user via a user interface the need for training, and prompting the user for a confirmation to start the training. It should be noted that the recording the one or more changes at step 503 starts based on the confirmation by the user. Similarly, in some embodiments, the control logic 500 further includes the steps of notifying a user via a user interface of the conformation, and prompting the user for a confirmation to stop the training. Again, it should be noted that the recording the one or more changes at step 503 stops based on the confirmation by the user.

In some embodiments, dynamically training the one or more BOTs at step 504 further comprises adding at least one of new data and new rules, removing at least one of existing data and existing rules, or updating at least one of existing data and existing rules. In some embodiments, the control logic 500 further includes the step of validating BOTs using confusion vector and adaptive thresholding.

Referring now to FIG. 6, exemplary control logic 600 for dynamically training one or more BOTs in response to one or more changes in a process environment is depicted in greater detail via a flowchart in accordance with some embodiments of the present disclosure. As illustrated in the flowchart, the control logic 600 starts when the system is started or when the process environment is invoked within the system at step 601. The components of the dynamic training engine 200 are also activated along with the system or the process environment at step 601. The existing trained BOTs performs their respective tasks at step 602. At regular intervals, the change detection sub-module 207 requests the state monitoring sub-module 206 to get the screen details. It should be noted that, in some embodiments, the regular interval may be configurable by the user. The state monitoring sub-module 206 returns the screen details such as images, user actions, action order in which user is acting upon, and so forth. The change detection sub-module 207 shares the screen details with the anticipator sub-module 209. The anticipator sub-module 208 compares the screen/state details with existing details for achieving the goal for the BOT at step 603. If the anticipator sub-module 208 finds any difference in the confirmatory predictors at step 604, it sends the details to the user interface sub-module 209 for the user notification as training is required to proceed at step 605. The anticipator sub-module 208 further seeks user confirmation for re-training at step 606.

Upon user confirmation to retrain, the anticipator sub-module 208 starts recording the user actions and other details at step 607. The anticipator sub-module 208 also keeps comparing the screen/state details with existing details for achieving the goal for the BOT at step 608. When the anticipator sub-module 208 observes the confirmatory predictors are meeting again at step 609, it notifies the user via the user interface sub-module 209. The anticipator sub-module 208 also seeks user confirmation to stop re-training at step 610. Upon user confirmation to stop re-training, the anticipator sub-module 208 merges the modifications, inserts the new changes, and removes the unwanted data with respect to the changes trained by user at step 611. The rules generation module 202 then updates the rules as per the changes. It builds a decision tree (rules) with valid values and extremas, and optimizes using confirmatory predictors at step 612. Further, the model validation module 203 validates the learned model at step 613. It analyzes the goal achieved using confusion vector with adaptive thresh-holding thereby continuously updating model for optimized results. The control logic 600 stops at step 614 after validation of the model at step 613 or if the user does not confirm for re-training at step 606.

As will be also appreciated, the above described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

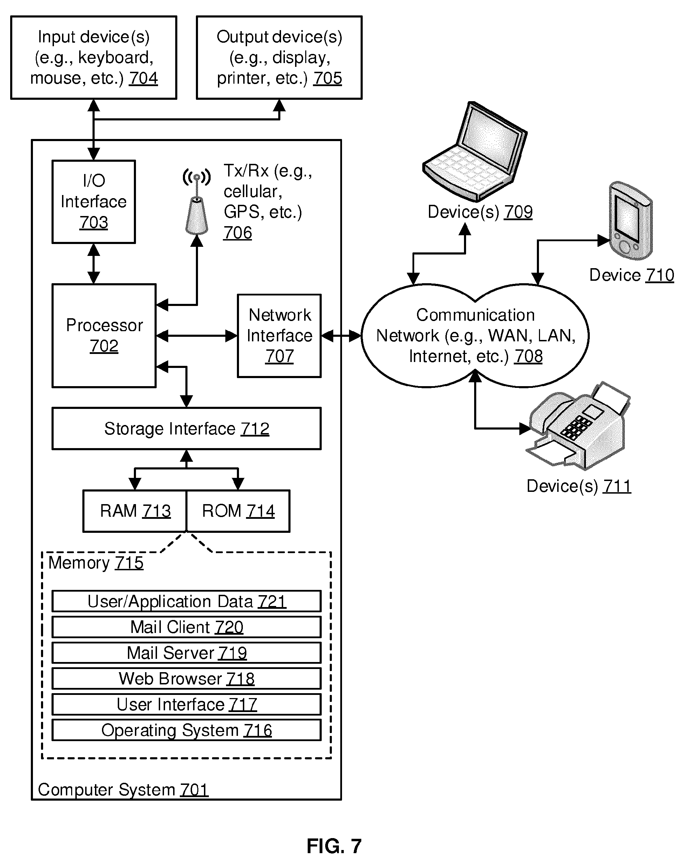

The disclosed methods and systems may be implemented on a conventional or a general-purpose computer system, such as a personal computer (PC) or server computer. Referring now to FIG. 7, a block diagram of an exemplary computer system 701 for implementing embodiments consistent with the present disclosure is illustrated. Variations of computer system 701 may be used for implementing system 100 for dynamic training of BOTs in response to change in process environment. Computer system 701 may comprise a central processing unit ("CPU" or "processor") 702. Processor 702 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 702 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 702 may be disposed in communication with one or more input/output (I/O) devices via I/O interface 703. The I/O interface 703 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 703, the computer system 701 may communicate with one or more I/O devices. For example, the input device 704 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, altimeter, gyroscope, proximity sensor, or the like), stylus, scanner, storage device, transceiver, video device/source, visors, etc. Output device 705 may be a printer, fax machine, video display (e.g., cathode ray tube (CRT), liquid crystal display (LCD), light-emitting diode (LED), plasma, or the like), audio speaker, etc. In some embodiments, a transceiver 506 may be disposed in connection with the processor 702. The transceiver may facilitate various types of wireless transmission or reception. For example, the transceiver may include an antenna operatively connected to a transceiver chip (e.g., Texas Instruments WiLink WL1283, Broadcom BCM47501UB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 702 may be disposed in communication with a communication network 708 via a network interface 707. The network interface 707 may communicate with the communication network 708. The network interface may employ connection protocols including, without limitation, direct connect, Ethernet (e.g., twisted pair 10/100/1000 Base T), transmission control protocol/internet protocol (TCP/IP), token ring, IEEE 802.11 a/b/g/n/x, etc. The communication network 708 may include, without limitation, a direct interconnection, local area network (LAN), wide area network (WAN), wireless network (e.g., using Wireless Application Protocol), the Internet, etc. Using the network interface 707 and the communication network 708, the computer system 701 may communicate with devices 709, 710, and 711. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 701 may itself embody one or more of these devices.

In some embodiments, the processor 702 may be disposed in communication with one or more memory devices (e.g., RAM 713, ROM 714, etc.) via a storage interface 712. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 716, user interface application 717, web browser 718, mail server 719, mail client 720, user/application data 721 (e.g., any data variables or data records discussed in this disclosure), etc. The operating system 716 may facilitate resource management and operation of the computer system 701. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 717 may facilitate display, execution, interaction, manipulation, or operation of program components through textual or graphical facilities. For example, user interfaces may provide computer interaction interface elements on a display system operatively connected to the computer system 701, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 701 may implement a web browser 718 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 701 may implement a mail server 719 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 701 may implement a mail client 720 stored program component. The mail client may be a mail viewing application, such as Apple Mail, Microsoft Entourage, Microsoft Outlook, Mozilla Thunderbird, etc.

In some embodiments, computer system 701 may store user/application data 721, such as the data, variables, records, etc. (e.g., images, screen details, action or activities log, learnt paths, BOTs, new data, and so forth) as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

As will be appreciated by those skilled in the art, the techniques described in the various embodiments discussed above provide for dynamic retraining of BOTs upon detection of changes in the robotic process environment or changes in the rules. Further, as will be appreciated by those skilled in the art, the techniques described in the various embodiments discussed above anticipate the need for full or partial retraining as required using confusion vector with adaptive thresh-holding. Thus, if the techniques understand the further path during retraining, the techniques may notify the user of the same indicating that there is no need of complete training. The techniques may then request the user to confirm if the user wants to stop training. Additionally, the techniques described in the various embodiments discussed above validate the learnt model and build the optimal path.

The specification has described system and method for dynamically training BOTs in response to change in process environment. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method for dynamically training one or more BOTs in response to one or more changes in a process environment, the method comprising:
detecting the one or more changes in the process environment;
determining a need for training the one or more BOTs based on the one or more changes in the process environment; and
after determining the need,
recording the one or more changes in the process environment until a conformation of the process environment to a pre-existing process environment with respect to the one or more BOTs; and
dynamically training the one or more BOTs based on the recording of the one or more changes.

2. The method of claim 1, wherein the process environment comprises at least one of a system environment, a software environment, a user interface, a user action on a user interface, and a user navigation within the user interface.

3. The method of claim 1 or claim 2, wherein detecting comprises:
monitoring one or more attributes of the process environment; and
comparing the one or more attributes of the process environment with one or more pre-existing attributes of the pre-existing process environment with respect to the one or more BOTs.

4. The method of any of the preceding claims, wherein determining the need for training comprises determining a difference in one or more confirmatory predictors between the process environment and the pre-existing process environment with respect to the one or more BOTs, and wherein each of the one or more confirmatory predictors comprise a unique combination of one or more attributes of the process environment.

5. The method of any of the preceding claims, further comprising:
notifying a user via a user interface of the need for training; and
prompting the user for a confirmation to start the training; and
wherein recording the one or more changes starts based on the confirmation by the user.

6. The method of claim any of the preceding claims, further comprising:
notifying a user via a user interface of the conformation; and
prompting the user for a confirmation to stop the training; and
wherein recording the one or more changes stops based on the confirmation by the user.

7. The method of any of the preceding claims, wherein dynamically training the one or more BOTs comprises at least one of:
adding at least one of new data and new rules;
removing at least one of existing data and existing rules; and
updating at least one of existing data and existing rules.

8. The method of any of the preceding claims, further comprising validating BOTs using confusion vector and adaptive thresholding.

9. A system for dynamically training one or more BOTs in response to one or more changes in a process environment, the system comprising:
at least one processor; and
a computer-readable medium storing instructions that, when executed by the at least one processor, cause the at least one processor to perform the method of any of the preceding claims.

10. A non-transitory computer-readable medium storing computer-executable instructions for performing the method of any of claims 1 to 8.
